(19) Europäisches Patentamt
European Patent Office
Office européen des brevets

(11) **EP 4 661 128 A1**

(12) **EUROPEAN PATENT APPLICATION**

(43) Date of publication:
**10.12.2025 Bulletin 2025/50**

(21) Application number: **25177158.0**

(22) Date of filing: **19.05.2025**

(51) International Patent Classification (IPC):
*H01M 10/04* (2006.01)       *H01M 50/105* (2021.01)
*H01M 50/474* (2021.01)       *H01M 50/486* (2021.01)
*H01M 50/491* (2021.01)

(52) Cooperative Patent Classification (CPC):
H01M 50/474; H01M 10/0431; H01M 10/0468;
H01M 50/105; H01M 50/486; H01M 50/491

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.06.2024 KR 20240073353**

(71) Applicant: SAMSUNG SDI CO., LTD.
**Yongin-si, Gyeonggi-do 17084 (KR)**

(72) Inventors:
• **SEINO, Hiroshi**
  **17084 Yongin-si, Gyeonggi-do (KR)**
• **AHN, Jeongchull**
  **17084 Yongin-si, Gyeonggi-do (KR)**
• **KIM, Sang Hyun**
  **17084 Yongin-si, Gyeonggi-do (KR)**
• **HONG, Sunyang**
  **17084 Yongin-Si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **SECONDARY BATTERY**

(57)     A secondary battery includes an electrode assembly including a first electrode plate, a second electrode plate having a polarity different from the first electrode plate, and a separator between the first electrode plate and the second electrode plate, a case configured to accommodate the electrode assembly, and an adhesive member between the electrode assembly and the case, the adhesive member including a porous film.

FIG. 2

## Description

## BACKGROUND

### 1. Field

Aspects of embodiments of the present disclosure relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

As the application range of secondary batteries in mobile devices expands, it is becoming increasingly common for devices with secondary batteries to be dropped in various usage environments. In such cases, the battery mounted in the device may be damaged due to the impact when the device is dropped, which may lead to short circuits, smoke emission, or ignition. This issue is particularly pronounced with polymer batteries, which use pouches as external casings and are therefore more susceptible to deformation. Additionally, during the drop, significant movement of the electrode assembly within the pouch can cause collisions inside the mobile device's case, possibly resulting in short circuits.

To address these issues, conventional techniques have used an adhesive resin to fix the pouch and the electrode assembly. However, the adhesive resin can exhibit fluidity, and thus a thickness of the adhesive resin may become excessively small in certain areas of an adhesive surface. As a result, the adhesive strength is reduced due to the excessively thin adhesive layer, making it more vulnerable to impacts during drops.

The above information disclosed in this Background section is for enhancement of understanding of the background of the present disclosure, and therefore, it may contain information that does not constitute related (or prior) art.

## SUMMARY

Aspects of embodiments of the present disclosure are directed to a secondary battery.

These and other aspects and features of the present disclosure will be described in or will be apparent from the following description of embodiments of the present disclosure.

According to some embodiments of the present disclosure, there is provided a secondary battery including: an electrode assembly including a first electrode plate, a second electrode plate having a polarity different from the first electrode plate, and a separator between the first electrode plate and the second electrode plate; a case configured to accommodate the electrode assembly; and an adhesive member between the electrode assembly and the case, the adhesive member including a porous film. Hence, as the adhesive member comprises a porous film, it is possible to maintain the thickness of the adhesive layer between the electrode assembly and the. In other words, uniform adhesion strength can be provided between the electrode assembly and the case. Accordingly, the resistance to impacts due to the drop may be increased, thereby improving the safety of the secondary battery.

In some embodiments, the porous film has a thickness of 50 $\mu$m or less, for example at most 50 $\mu$m or down to 40 $\mu$m, down to 30 $\mu$m, down to 20 $\mu$m or even down to 10 $\mu$m. An advantage of this embodiment may be that movement of the electrode assembly relative to the case due to elasticity of the porous film is limited.

In some embodiments, the porous film has a porosity ranging from 20 % to 80 % and for example at least 20 % and/or up to 30 %, up to 40 %, up to 50 %, up to 60 %, up to 70 % or up to 80 %. An advantage of this embodiment may be that the porous film can easily absorb or soak up liquids like liquid adhesives.

In some embodiments, the porous film has a melting point of 150 °C or higher, for example at least 150 °C and/or up to 160 °C, up to 170 °C, up to 180 °C, up to 190 °C, up to 200 °C, up to 210 °C, up to 220 °C, up to 230 °C, up to 240 °C or up to 250 °C. An advantage of this embodiment may be that the porous film is thermally stable, further reducing undesired relative movements between the electrode assembly and the case even when the operation temperature of the secondary battery is high, e.g. during charging or discharging.

In some embodiments, the porous film includes at least one of a sponge, a non-woven fabric, or a woven fabric. An advantage of this embodiment may be that materials for the production of the porous film can be chosen in a flexible manner based on availability, cost or technical provision.

In some embodiments, the porous film includes an open-cell foam body. An advantage of this embodiment may be that the connected pores of such a body can easily absorb or soak up liquids like liquid adhesives.

In some embodiments, the porous film includes at least one of polyethylene (PE), polypropylene, ethylene-vinyl acetate (EVA) copolymer, polyolefin, rubber, polystyrene, polyurethane, or melamine resin. An advantage of this embodiment may be that An advantage of this embodiment may be that materials for the production of the porous film can be chosen in a flexible manner based on availability, cost or technical provision.

In some embodiments, the adhesive member further includes a hot-melt adhesive that is impregnated into the porous film. An advantage of this embodiment may be that hot-melt adhesives solidify by cooling down, such that further measures, e.g. UV radiation, are not required for solidifying the adhesive.

In some embodiments, the hot-melt adhesive includes at least one of acrylic-based resin, synthetic rubber-based resin, polyolefin-based resin, ester-based resin, urethane-based resin, epoxy-based resin, or silicone-based resin. An advantage of this embodiment may be that materials for the production of the porous film can be chosen in a flexible manner based on availability, cost or technical provision.

In some embodiments, a melting point of the hot-melt adhesive is lower than a melting point of the porous film. An advantage of this embodiment may be that the hot-melt adhesive, when applied in a liquid and, thus, hot state, does not affect the structure of the porous film.

In some embodiments, the hot-melt adhesive has a melting point of 100 °C or lower, for example up to 100 °C and/or down to 90 °C, down to 80 °C or down to 70 °C. An advantage of this embodiment may be that the hot-melt adhesive, when applied in a liquid and, thus, hot state, does not affect other components of the secondary battery.

In some embodiments, fibers included in the porous film are bonded using the hot-melt adhesive. An advantage of this embodiment may be that using the same adhesive for bonding the fibers to each other and for bonding the porous film to the case and/or the electrode assembly avoids chemical incompatibilities and/or provides for homogeneous bonding forces.

According to some embodiments of the present disclosure, there is provided a method for manufacturing a secondary battery, the method including: preparing an electrode assembly; preparing an adhesive member to be positioned between the electrode assembly and a case accommodating the electrode assembly; and accommodating the electrode assembly and the adhesive member within the case, the adhesive member including a porous film. Hence, as the adhesive member comprises a porous film, it is possible to maintain the thickness of the adhesive layer between the electrode assembly and the. In other words, uniform adhesion strength can be provided between the electrode assembly and the case. Accordingly, the resistance to impacts due to the drop may be increased, thereby improving the safety of the secondary battery.

In some embodiments, the porous film has a thickness of 50 μm or less, for example at most 50 μm or down to 40 μm, down to 30 μm, down to 20 μm or even down to 10 μm. An advantage of this embodiment may be that movement of the electrode assembly relative to the case due to elasticity of the porous film is limited.

In some embodiments, the porous film has a porosity ranging from 20 % to 80 % and for example at least 20 % and/or up to 30 %, up to 40 %, up to 50 %, up to 60 %, up to 70 % or up to 80 %. An advantage of this embodiment may be that the porous film can easily absorb or soak up liquids like liquid adhesives.

In some embodiments, the porous film has a melting point of 150 °C or higher, for example at least 150 °C and/or up to 160 °C, up to 170 °C, up to 180 °C, up to 190 °C, up to 200 °C, up to 210 °C, up to 220 °C, up to 230 °C, up to 240 °C or up to 250 °C. An advantage of this embodiment may be that the porous film is thermally stable, further reducing undesired relative movements between the electrode assembly and the case even when the operation temperature of the secondary battery is high, e.g. during charging or discharging.

In some embodiments, the porous film includes at least one of a sponge, a non-woven fabric, or a woven fabric. An advantage of this embodiment may be that materials for the production of the porous film can be chosen in a flexible manner based on availability, cost or technical provision.

In some embodiments, the porous film includes an open-cell foam body. An advantage of this embodiment may be that the connected pores of such a body can easily absorb or soak up liquids like liquid adhesives.

In some embodiments, the porous film includes at least one of polyethylene (PE), polypropylene, ethylene-vinyl acetate (EVA) copolymer, polyolefin, rubber, polystyrene, polyurethane, or melamine resin. An advantage of this embodiment may be that materials for the production of the porous film can be chosen in a flexible manner based on availability, cost or technical provision.

In some embodiments, the preparing of the adhesive member includes preparing the porous film; and impregnating the porous film with a hot-melt adhesive. An advantage of this embodiment may be that hot-melt adhesives solidify by cooling down, such that further measures, e.g. UV radiation, are not required for solidifying the adhesive. Further, the porous film may absorb or soak up the liquid adhesive, e.g. by capillary action, which may facilitate spreading the adhesive in or throughout the porous film.

In some embodiments, the preparing of the porous film includes: preparing fibers of the porous film; and bonding the fibers using the hot-melt adhesive. An advantage of this embodiment may be that during bonding, the hot-melt adhesive can enter the porous film, which may, e.g. due to capillary action, improve the distribution of the adhesive.

In some embodiments, the hot-melt adhesive includes at least one of acrylic-based resin, synthetic rubber-based resin, polyolefin-based resin, ester-based resin, urethane-based resin, epoxy-based resin, or silicone-based resin. An advantage of this embodiment may be that materials for the production of the porous film can be chosen in a flexible manner based on availability, cost or technical provision.

In some embodiments, a melting point of the hot-melt adhesive is lower than a melting point of the porous film. An advantage of this embodiment may be that the hot-melt adhesive, when applied in a liquid and, thus, hot state, does not affect the structure of the porous film.

In some embodiments, the hot-melt adhesive has a melting point of 100 °C or lower, for example up to 100 °C and/or down to 90 °C, down to 80 °C or down to 70 °C. An advantage of this embodiment may be that the hot-melt adhesive, when applied in a liquid and, thus, hot state, does not affect other components of the secondary battery.

In some embodiments, fibers included in the porous film are bonded using the hot-melt adhesive. An advantage of this embodiment may be that using the same adhesive for bonding the fibers to each other and for bonding the porous film to the case and/or the electrode assembly avoids chemical incompatibilities and/or provides for homogeneous bonding forces.

In some embodiments, the accommodating of the electrode assembly and the adhesive member includes attaching the adhesive member to an outer surface of the electrode assembly or an inner surface of the case. An advantage of this embodiment may be that applying the adhesive member can be flexibly adapted to production details while providing for an improve attachment of the electrode assembly to the case via the adhesive member.

In some embodiments, the method further includes bonding the electrode assembly and the case together using thermal compression. Such a bonding may also be designated as thermocompression bonding or diffusion bonding. An advantage of this embodiment may be that the adhesive member and/or the hot-melt adhesive are heated, thereby at least partly liquified and optionally solidify in one process step. Additionally or alternatively, the thickness of the porous film may be reduced by the compression, such that movements of the electrode assembly relative to the case due to porous film elasticity may be further reduced.

The porous film can comprise different porous materials, e.g. at least two or more of the above mentioned materials, or can comprise or even consist of only one of these materials.

In summary, as an advantage, it may be possible to maintain the thickness of the adhesive layer between the electrode assembly and the case through the porous film. In other words, uniform adhesion strength can be provided between the electrode assembly and the case. Accordingly, the resistance to impacts due to the drop may be increased, thereby improving the safety of the secondary battery.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

## BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

> FIG. 1 illustrates a secondary battery according to some embodiments of the present disclosure.
> FIGS. 2 and 3 illustrate a secondary battery in which an adhesive member is disposed thereon according to some embodiments of the present disclosure.
> FIG. 4 illustrates a porous film according to some embodiments of the present disclosure.
> FIG. 5 illustrates a porous film according to some other embodiments of the present disclosure.
> FIG. 6 illustrates a porous film being compressed according to some embodiments of the present disclosure.
> FIG. 7 is a flowchart illustrating a method for manufacturing a secondary battery according to some embodiments of the present disclosure.
> FIG. 8 illustrates a process for manufacturing an adhesive member according to some embodiments of the present disclosure.

## DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the term 'porous film' may refer to a porous material including a plurality of microscopic vacancies. Here, the vacancies penetrate a support structure (e.g., a fiber or the like) in multiple directions and may be impregnated with a resin, such as a hot-melt adhesive. Substances may be adsorbed onto surfaces of these vacancies, or certain substances may be filtered out depending on the size of the vacancies. Additionally, the porous material may include a foam body made using bubbles (e.g., a closed-cell foam, an open-cell foam, or the like). A percentage of porosity may correspond to the amount of free volume of the porous film compared to its complete volume. Alternatively, the porosity may be determined by applying the Archimedes method.

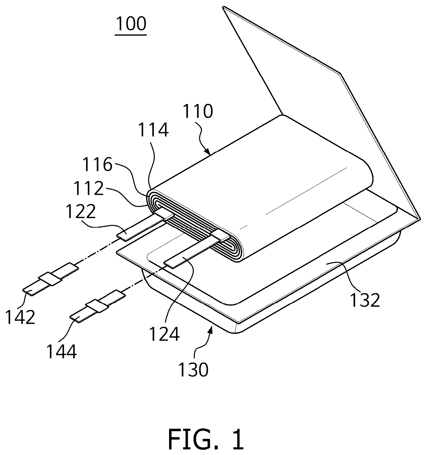

FIG. 1 illustrates a secondary battery 100 according to some embodiments of the present disclosure.

As shown in FIG. 1, secondary battery 100 includes an electrode assembly 110 and a case 130 accommodating the electrode assembly 110.

The electrode assembly 110 includes a negative electrode plate 112 as a first electrode plate, a positive electrode plate 114 as a second electrode plate, and a separator 116 interposed therebetween. The negative electrode plate 112 may include a negative electrode tab 122 electrically connected to a negative electrode uncoated portion, and the positive electrode plate 114 may include a positive electrode tab 124 electrically connected to a positive electrode uncoated portion. The negative electrode tab 122 and the positive electrode tab 124 are respectively welded to a negative electrode lead 142 and a positive electrode lead 144 of an external terminal to be electrically connected to the outside. A tab film for insulation from the case 130 is attached to the negative electrode lead 142 and the positive electrode lead 144.

In a state in which the electrode assembly 110 is accommodated in the case 130, sealing parts 132 of edges of the case 130 come into contact with each other (e.g., the sealing parts 132 around the periphery of the bottom portion of the case 130 come into contact with a corresponding peripheral area of the top potion (e.g., a cover) of the case 130) to be sealed. The sealing is performed in a state in which the tab film is disposed between the sealing parts 132.

The sealing parts 132 may be made of a heat-fusible material and may have a structure in which sealing is achieved by bonding heat-fusible layers to each other.

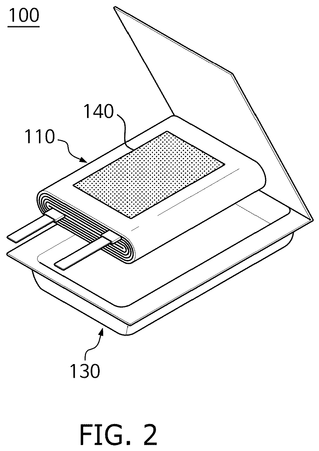

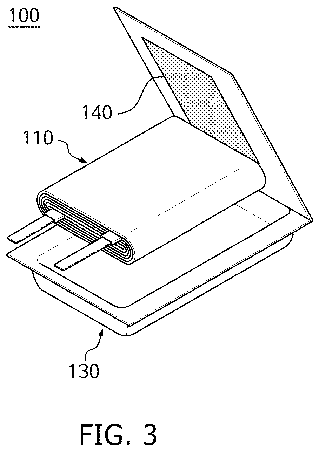

FIGS. 2 and 3 illustrate the secondary battery 100 in which an adhesive member 140 is disposed according to some embodiments of the present disclosure. The secondary battery 100 includes the electrode assembly 110, the case 130 accommodating the electrode assembly 110, and the adhesive member 140 disposed between the electrode assembly 110 and the case 130. The adhesive member 140 may include a porous film.

In some embodiments, the porous film may include at least one of a sponge that is a foam body, a non-woven fabric, or a woven fabric, but is not limited to these materials. Particularly, considering the permeability of the electrolyte, the porous film may include an open-cell foam body (e.g., an interconnecting foam body). For example, the porous film may include, but is not limited to, polyethylene (PE), polypropylene, ethylene-vinyl acetate (EVA) copolymer, polyolefin, rubber, polystyrene, polyurethane, melamine resin, and the like. Additionally, the porous film may include not only a single material but also a mixture of materials.

In some embodiments, the porous structure of the porous film may be created using various methods. For example, a foam body may be produced by generating bubbles from a dissolved gas, by generating bubbles through thermal decomposition or chemical reaction of a dispersed foam body, or by shearing and splitting large bubbles. In some other examples, the foam body may be produced by, but is not limited to, stretching a plastic that has a filler dispersed therein to create a gap at the interface between the filler and the plastic, or by eluting a soluble component dispersed in the plastic.

In some embodiments, the adhesive member 140 may further include a hot-melt adhesive that is impregnated into the porous film. For example, the hot-melt adhesive may include, but is not limited to, an acrylic-based resin, a synthetic rubber-based resin, a polyolefin-based resin, an ester-based resin, a urethane-based resin, an epoxy-based resin, and/or a silicone-based resin. In some embodiments, the porous film may be impregnated with the hot-melt adhesive by applying a molten hot-melt adhesive solution to the porous film, or by impregnating the porous film with a hot-melt adhesive solution dissolved in a solvent and then volatilizing the solvent. However, the present disclosure is not limited thereto, and various impregnation methods of the hot melt adhesive may be used.

In some embodiments, the melting point of the porous film may be about 150 °C or higher in preparation for the thermal compression process. For example the melting point of the porous film may be at least 150 °C and/or up to 160 °C, up to 170 °C, up to 180 °C, up to 190 °C, up to 200 °C, up to 210 °C, up to 220 °C, up to 230 °C, up to 240 °C or up to 250 °C. In such examples, the melting point of the hot-melt adhesive may be lower than that of the porous film. For example, the melting point of the hot-melt adhesive may be, but is not limited to, 100 °C or lower. For example, the melting point of the hot-melt adhesive may be up to 100 °C and/or down to 90 °C, down to 80 °C or down to 70 °C

In some embodiments, the porous film may include a non-woven fabric. In such examples, a fiber (e.g., a fleece) formation process and a fiber-to-fiber bonding process may be performed to produce the non-woven fabric. The fiber formation process may be carried out using methods such as a dry method, a wet method, a spun-bonded fabric method, a melt-blown method, or the like, but is not limited thereto. The fiber-to-fiber bonding process may be carried out using methods such as a thermal bonding method, a chemical bonding method, a needle-punching method, a spunlace method, or the like, but is not limited thereto. Here, e.g. in the case of the chemical bonding method, the fibers may be bonded using a hot-melt adhesive that is impregnated into the porous film. Thus, the fiber-to-fiber bonding process and the hot-melt adhesive impregnation process can be integrated into one process. Such non-woven fabrics may include, but are not limited to, polyester, polyolefin, nylon, cotton, pulp, rayon, and the like.

In some embodiments, the adhesive member 140 may be disposed between the electrode assembly 110 and the case 130. For example, the adhesive member 140 may be disposed on an outer surface of the electrode assembly 110 or an inner surface of the case 130 corresponding to the electrode assembly 110. In some embodiments, the adhesive member 140 may be arranged to fix the electrode assembly 110 and the case 130 to each other.

In some embodiments, the adhesive member 140 may be disposed in an internal space formed by the case 130. The case 130 may include a lower case having an open upper side and an internal space in which the electrode assembly 110 is accommodated, and an upper case coupled to the lower case. The adhesive member 140 may be positioned between the electrode assembly 110 accommodated in the internal space and the upper case. In some embodiments, the adhesive member 140 may be disposed between the electrode assembly 110 accommodated in the internal space and the lower case.

As shown in FIG. 2, the adhesive member 140 may be disposed on a portion of the outer surface of the electrode assembly 110. For example, the adhesive member 140 may be disposed on the outer surface of the electrode assembly 110 that faces the upper case. In other examples, the adhesive member 140 may be disposed on the outer surface of the electrode assembly 110 that faces the lower case.

FIG. 2 illustrates that the adhesive member 140 is disposed on a portion of the outer surface of the electrode assembly 110, but the present disclosure is not limited thereto. For example, the adhesive member 140 may be disposed on the entire outer surface of the electrode assembly 110 or at least a portion of a front surface and/or a rear surface of the electrode assembly 110. In other examples, the adhesive member 140 may be disposed on at least a portion of an upper surface or at least a portion of a lower surface of the electrode assembly 110. Additionally, a plurality of adhesive members may be disposed on the outer surface of the electrode assembly 110.

FIG. 3 illustrates that the adhesive member 140 is disposed on a portion of an inner surface of the case 130, but the present disclosure is not limited thereto. For example, the adhesive member 140 may be disposed on the entire inner surface of the case 130. In other examples, the adhesive member 140 may be disposed on at least a portion of an inner upper surface or an inner lower surface of the case 130. Additionally, a plurality of adhesive members may be disposed on the inner surface of the case 130.

In FIGS. 2 and 3, the adhesive member 140 is shown as having a rectangular shape, but the present disclosure is not limited thereto. For example, the adhesive member 140 may have a polygonal shape, a circular shape, an oval shape, or any other suitable shape.

With this configuration, it is possible to maintain the thickness of the adhesive layer between the electrode assembly 110 and the case 130 through the porous film while maintaining adhesive strength. In other words, uniform adhesion strength can be provided between the electrode assembly 110 and the case 130. Accordingly, the resistance to impacts due to drops may be increased, thereby improving the safety of the secondary battery.

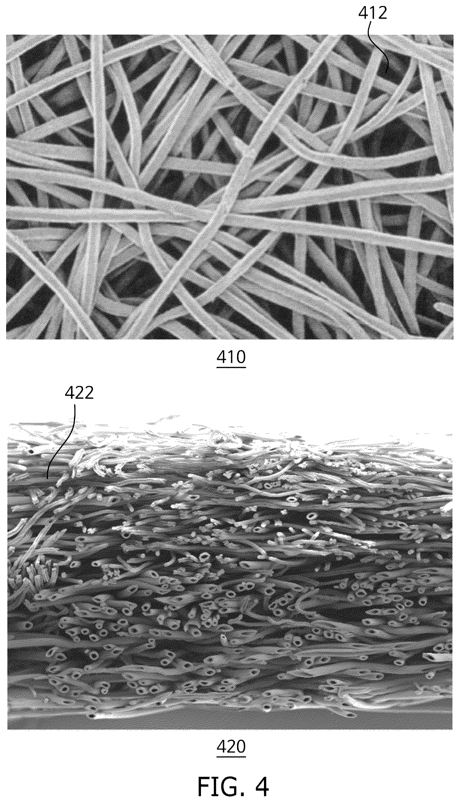

FIG. 4 illustrates a porous film according to some embodiments of the present disclosure. A first image 410 is an example showing a surface of a porous film (e.g., a non-woven fabric). Further, a second image 420 is an example of a cross-section of a porous film. Referring to FIG. 4, a hot-melt adhesive of an adhesive member may be impregnated into vacancies 412 and 422 of the porous film.

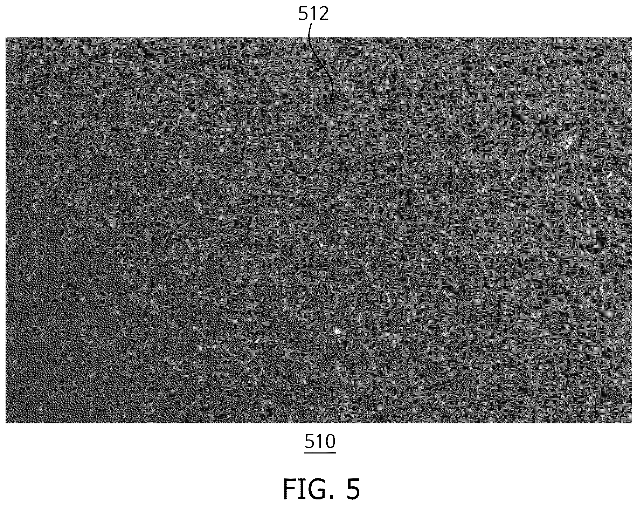

FIG. 5 illustrates a porous film according to some embodiments of the present disclosure. An image 510 is an example showing a surface or a cross-section of the porous film (e.g., the sponge). Referring to FIG. 5, a hot-melt adhesive of an adhesive member may be impregnated into a vacancy 512 of the porous film. The porous film can comprise different porous materials, e.g. at least two or more of the above or below mentioned materials, or can comprise or even consist of only one of these materials.

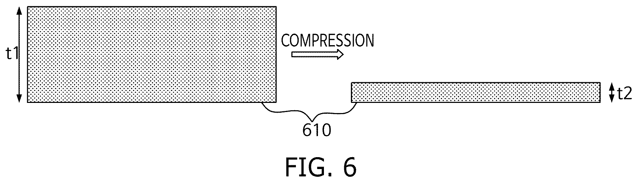

FIG. 6 illustrates a porous film 610 being compressed according to some embodiments of the present disclosure. In some embodiments, a porosity of the porous film 610 may range from about 20 % to about 80 %. For example, the porosity of the porous film 610 may be at least 20 % and/or up to 30 %, up to 40 %, up to 50 %, up to 60 %, up to 70 % or up to 80 %. Here, the porosity may be calculated using the Archimedes method. For example, a dry weight (a) of the porous film may be measured. Thereafter, the porous film may be accommodated in a container filled with water placed on a balance. At this time, the porous film may not come into contact with the container or rise above the water surface, and may be in a state in which air bubbles have been removed. In such examples, the increase in weight on the balance may represent a volume (b) of a source resin of the porous film. Additionally, the porosity may be calculated using a true density (c) of the source resin of the porous film. The porosity may be expressed by the following equation 1:

Equation 1

$$\left(1 - \frac{a}{b \times c}\right) \times 100 \ (\%).$$

That is, a thickness t2 of the porous film 610 after compressing the vacancy volume may be equivalent to e.g. 20 % of a thickness t1 of the porous film 610 before compression.

In some embodiments, the thickness t1 of the porous film 610 before compression may be 50 $\mu$m or less. For example, the thickness t1 of the porous film 610 before compression may be at most 50 $\mu$m and/or down to 40 $\mu$m, down to 30 $\mu$m, down to 20 $\mu$m or even down to 10 $\mu$m. For example, the thickness t1 of the porous film 610 before compression may be 30 $\mu$m or less, but is not limited thereto.

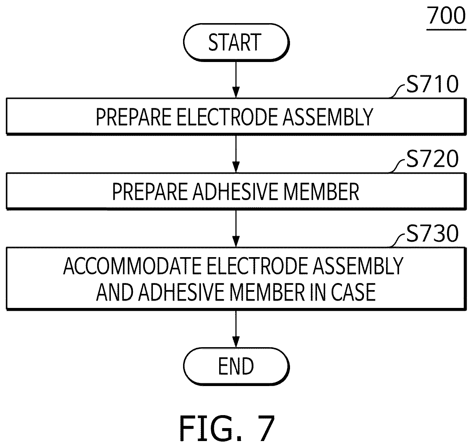

FIG. 7 is a flowchart illustrating a method 700 for manufacturing a secondary battery according to some embodiments of the present disclosure. In some embodiments, the method 700 for manufacturing the secondary battery may begin with preparing an electrode assembly S710. Then, an adhesive member may be prepared to be disposed between the electrode assembly and a case accommodating the electrode assembly S720. For example, a porous film may be prepared. In such examples, fibers for a porous film may be prepared. Further, the fibers can be bonded using a hot-melt adhesive. In some embodiments, the hot-melt adhesive may be impregnated into the porous film. Here, the melting point of the hot-melt adhesive may be lower than the melting point of the porous film.

Next, the electrode assembly and the adhesive member may be accommodated in the case S730. For example, the adhesive member may be attached to an outer surface of the electrode assembly or an inner surface of the case. Thereafter, the electrode assembly and the case may be bonded together using thermal compression. The application of the thermal compression may improve the adhesion of the dried hot-melt adhesive, and the electrode assembly and the case can be firmly fixed.

In some embodiments, the adhesive member may include a porous film. The porous film may for example have a thickness of 50 $\mu$m or less, e.g. a thickness as mentioned above. Additionally, the porous film may for example have a porosity ranging from 20% to 80%, e.g. a porosity mentioned above.

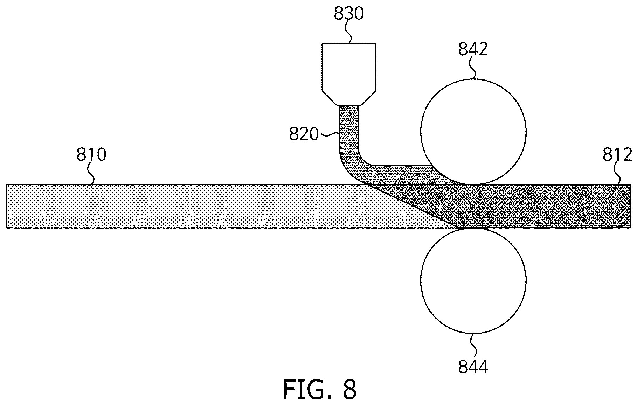

FIG. 8 illustrates a process for manufacturing an adhesive member 812 according to some embodiments of the present disclosure. In some embodiments, a porous film 810 may be moved by rollers 842 and 844. In this process, a nozzle 830 may dispense or spray a hot-melt adhesive 820 toward the porous film 810. Accordingly, the hot-melt adhesive 820 may be impregnated into the porous film 810, thereby manufacturing the adhesive member 812.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

**DESCRIPTION OF SOME REFERENCE SYMBOLS**

    100: secondary battery
    110: the electrode assembly
    112: negative electrode plate
    114: positive electrode plate
    116: separator
    122: negative electrode tab
    124: positive electrode tab
    130: case
    132: sealing part
    140: adhesive member

142: negative electrode lead
144: positive electrode lead
610: porous film

**Claims**

1. A secondary battery (100) comprising:

   an electrode assembly (110) comprising a first electrode plate (112), a second electrode plate (114) having a polarity different from the first electrode plate (112), and a separator (116) between the first electrode plate (112) and the second electrode plate (114);
   a case (130) configured to accommodate the electrode assembly (110); and
   an adhesive member (140, 812) between the electrode assembly (110) and the case (130), the adhesive member (140, 812) comprising a porous film (610, 810).

2. The secondary battery (100) as claimed in claim 1, wherein the porous film (610, 810) has a thickness of 50 μm or less.

3. The secondary battery (100) as claimed in claim 1 or 2, wherein the porous film (610, 810) has a porosity ranging from 20 % to 80 %.

4. The secondary battery (100) as claimed in any of claims 1 to 3, wherein the porous film (610, 810) has a melting point of 150°C or higher.

5. The secondary battery (100) as claimed in any of claims 1 to 4, wherein the porous film (610, 810) comprises at least one of a sponge, a non-woven fabric, or a woven fabric.

6. The secondary battery (100) as claimed in any of claims 1 to 5, wherein the porous film (610, 810) comprises an open-cell foam body.

7. The secondary battery (100) as claimed in any of claims 1 to 6, wherein the porous film (610, 810) comprises at least one of polyethylene, PE, polypropylene, ethylene-vinyl acetate, EVA, copolymer, polyolefin, rubber, polystyrene, polyurethane, or melamine resin.

8. The secondary battery (100) as claimed in any of claims 1 to 7, wherein the adhesive member (140, 812) further comprises a hot-melt adhesive (820) that is impregnated into the porous film (610, 810).

9. The secondary battery (100) as claimed in claim 8, wherein the hot-melt adhesive (820) comprises at least one of acrylic-based resin, synthetic rubber-based resin, polyolefin-based resin, ester-based resin, urethane-based resin, epoxy-based resin, or silicone-based resin.

10. The secondary battery (100) as claimed in claim 8 or 9, wherein a melting point of the hot-melt adhesive (820) is lower than a melting point of the porous film (610, 810).

11. The secondary battery (100) as claimed in any of claims 8 to 10, wherein the hot-melt adhesive (820) has a melting point of 100 °C or lower.

12. The secondary battery (100) as claimed in an of claims 8 to 11, wherein fibers included in the porous film (610, 810) are bonded using the hot-melt adhesive (820).

13. A method (700) for manufacturing a secondary battery (100), the method (700) comprising:

   preparing (S710) an electrode assembly (110);
   preparing (S720) an adhesive member (140, 812) to be positioned between the electrode assembly (110) and a case (130) accommodating the electrode assembly (110); and
   accommodating (S730) the electrode assembly (110) and the adhesive member (140, 812) within the case (130), the adhesive member (140, 812) comprising a porous film (610, 810).

14. The method (700) as claimed in claim 13, wherein the accommodating (S730) of the electrode assembly (110) and the adhesive member (140, 812) comprises:
    attaching the adhesive member (140, 812) to an outer surface of the electrode assembly (110) or an inner surface of the case (130).

15. The method (700) as claimed in claim 13 or 14, further comprising:
    bonding the electrode assembly (110) and the case (130) together using thermal compression.

100

110

114

116

112

122

142

144

124

130

132

FIG. 1

FIG. 2

FIG. 3

410

420

FIG. 4

512

510

FIG. 5

FIG. 6

700

START

S710

PREPARE ELECTRODE ASSEMBLY

S720

PREPARE ADHESIVE MEMBER

S730

ACCOMMODATE ELECTRODE ASSEMBLY
AND ADHESIVE MEMBER IN CASE

END

FIG. 7

FIG. 8

Europäisches
Patentamt

European
Patent Office

Office européen
des brevets

# EUROPEAN SEARCH REPORT

**Application Number**

EP 25 17 7158

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2018 0115064 A (LG CHEMICAL LTD [KR]) 22 October 2018 (2018-10-22) | 1,8,9, 13-15 | INV. H01M10/04 |
| Y | * paragraphs [0011], [0018], [0038], | 12 | H01M50/105 |
| A | [0039], [0041] - [0044], [0053]; claim 5; figures 1,2 * | 2-7,10, 11 | H01M50/474 H01M50/486 H01M50/491 |
|  | ----- |  |  |
| X | CN 116 799 316 A (SAMSUNG SDI CO LTD) 22 September 2023 (2023-09-22) | 1-11,13 |  |
| Y | * paragraphs [0046], [0056] - [0062], [0072], [0077], [0097], [0123], [0141], [0186], [0202], [0208] - [0218]; claim 9; figures 1,5A * | 4,12 |  |
|  | ----- |  |  |
| Y | CN 104 999 745 A (DAICEL CORP) 28 October 2015 (2015-10-28) | 4,12 |  |
| A | * paragraphs [0010], [0011], [0055], [0058], [0155], [0156] * | 1-3, 5-11, 13-15 |  |
|  | ----- |  |  |

**TECHNICAL FIELDS SEARCHED (IPC)**

H01M

The present search report has been drawn up for all claims

| Place of search | Date of completion of the search | Examiner |
|---|---|---|
| Munich | 30 September 2025 | Posch, Patrick |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 17 7158

This annex lists the patent family members relating to the patent documents cited in  the above-mentioned European search report.
The members are as contained in the European Patent Office EDP file on
The European Patent Office is in no way liable for these particulars which are merely given for the purpose of information.

30-09-2025

| Patent document cited in search report | | Publication date | Patent family member(s) | | Publication date |
|---|---|---|---|---|---|
| KR 20180115064 | A | 22-10-2018 | NONE | | |
| CN 116799316 | A | 22-09-2023 | CN | 116799316 A | 22-09-2023 |
| | | | EP | 4250423 A1 | 27-09-2023 |
| | | | KR | 20230137731 A | 05-10-2023 |
| | | | US | 2023307793 A1 | 28-09-2023 |
| CN 104999745 | A | 28-10-2015 | CN | 104999745 A | 28-10-2015 |
| | | | JP | 6284818 B2 | 28-02-2018 |
| | | | JP | 2015208881 A | 24-11-2015 |
| | | | KR | 20150123154 A | 03-11-2015 |
| | | | US | 2015306539 A1 | 29-10-2015 |

EPO FORM P0459

For more details about this annex : see Official Journal of the European Patent Office, No. 12/82